(19) Europäisches Patentamt
European Patent Office
Office européen des brevets

(11) EP 2 200 239 A2

(12) **EUROPEAN PATENT APPLICATION**

(43) Date of publication:
**23.06.2010 Bulletin 2010/25**

(51) Int Cl.:
***H04L 25/03*** *(2006.01)* ***H04L 25/02*** *(2006.01)*

(21) Application number: **10159553.6**

(22) Date of filing: **18.02.2004**

(84) Designated Contracting States:
**AT BE BG CH CY CZ DE DK EE ES FI FR GB GR HU IE IT LI LU MC NL PT RO SE SI SK TR**

(30) Priority: **18.02.2003 US 368891**

(62) Document number(s) of the earlier application(s) in accordance with Art. 76 EPC:
**04712360.9 / 1 595 377**

(71) Applicant: **Qualcomm Incorporated**
**San Diego, CA 92121-1714 (US)**

(72) Inventors:
- **Malladi, Durga Prasad**
  **San Diego, CA 92128 (US)**
- **Blanz, Josef J.**
  **67157, Wachenheim (DE)**
- **Wei, Yongbin**
  **San Diego, CA 92129 (US)**

(74) Representative: **O'Neill, Aoife et al**
**Tomkins & Co.**
**5 Dartmouth Road**
**Dublin 6 (IE)**

Remarks:
This application was filed on 09-04-2010 as a divisional application to the application mentioned under INID code 62.

# (54) Communication receiver with an adaptive equalizer that uses channel estimation

(57) In a wireless communication system, a method for estimating a transmitted signal is disclosed. A wireless signal is received that includes a pilot channel and at least one other channel. A transmitted signal is estimated using an equalizer and the received wireless signal. Taps of a filter of the equalizer are adapted through use of a channel estimate. The channel estimate is calculated from the pilot channel. The pilot channel and the at least one other channel are separated.

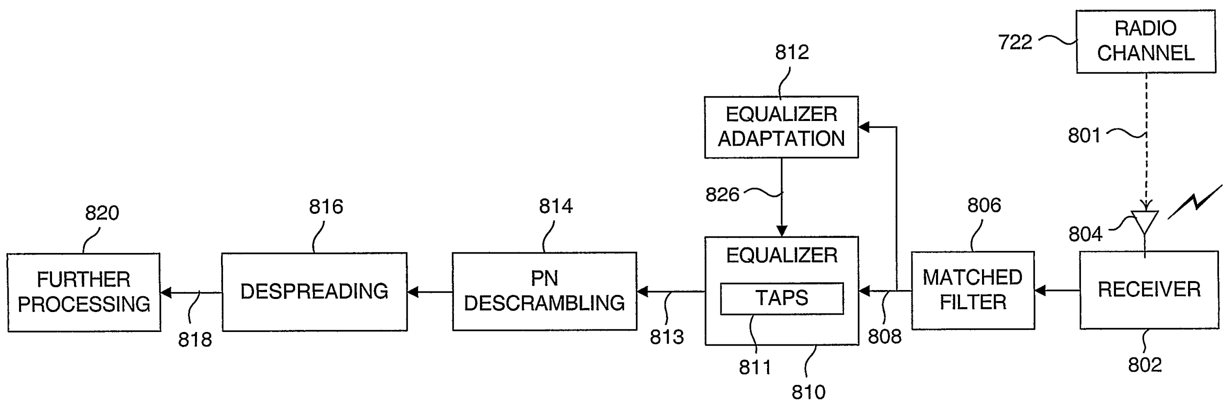


**FIG. 8**



Printed by Jouve, 75001 PARIS (FR)

## Description

## BACKGROUND

Field

The present invention relates generally to equalization in communications systems, and more specifically, to an adaptive equalizer for use with wireless communication systems.

Background

Communications systems are used for transmission of information from one device to another. Prior to transmission, information is encoded into a format suitable for transmission over a communication channel. The transmitted signal is distorted as it travels through the communication channel; the signal also experiences degradation from noise and interference picked up during transmission.

One effect that creates signal distortion is multipath propagation. Multipath signals are different versions of the same wireless signal that are generated by reflections from structures and natural formations. Multipath signals may have phase shifts that cause the signals to cancel each other out at certain locations. The loss of a signal due to the phase cancellation of multipath signals is known as fading. Fading is a problem in wireless systems because it disrupts user communications. For example, several multipath copies of a single wireless signal transmitted by a wireless communications device may be generated by reflections from trees and buildings. These multipath copies may combine and cancel each other out due to phase offset.

Another issue that may affect a signal is an inadequate signal-to-noise ratio. The signal-to-noise ratio ("SNR") represents the power of a signal relative to the surrounding noise. An adequate SNR needs to be maintained so that the signal may be separated from the noise.

An example of interference commonly encountered in bandlimited channels is called inter-symbol interference (ISI). ISI occurs as a result of the spreading of a transmitted symbol pulse due to the dispersive nature of the channel, which results in an overlap of adjacent symbol pulses. The dispersive nature of the channel is a consequence of multipath propagation. The received signal is decoded and translated into the original pre-encoded form. Both the transmitter and receiver are designed to minimize the effects of channel imperfections and interference.

Various receiver designs may be implemented to compensate for noise and interference caused by the transmitter and the channel. By way of example, an equalizer is a common choice for dealing with multipath, ISI and for improving the SNR. An equalizer corrects for distortions and generates an estimate of the transmitted symbol. In the wireless environment, equalizers are required to handle time-varying channel conditions. Ideally, the response of the equalizer adjusts to changes in channel characteristics. The ability of the equalizer to respond to changing conditions is related to the adaptation capabilities of the equalizer. Optimizing the equalizer is difficult, as this requires a balancing of competing goals.

A need exists, therefore, for an equalizer design that optimizes performance for a variety of systems and conditions.

## BRIEF DESCRIPTION OF THE DRAWINGS

FIG. 1 is a diagram of a spread spectrum communication system that supports a number of users;
FIG. 2 is a block diagram of a base station and a mobile station in a communications system;
FIG. 3 is a block diagram illustrating the downlink and the uplink between the base station and the mobile station;
FIG. 4 is a block diagram of the channels in an embodiment of the downlink;
FIG. 5 is a block diagram of the channels in an embodiment of the uplink;
FIG. 6 is a block diagram of an embodiment of a subscriber unit;
FIG. 7 is a functional block diagram illustrating the transmission of a wireless signal;
FIG. 8 is a functional block diagram illustrating the reception of a wireless signal;
FIG. 9 is a functional block diagram of an embodiment of the equalizer adaptation component;
FIG. 10 is a block diagram illustrating an implementation of an FIR filter;
FIG. 11 is a flow diagram of a method for using an adaptive equalizer when receiving a wireless signal by a mobile station; and
FIG. 12 is a flow diagram of a method for calculating new equalizer weights.

## DETAILED DESCRIPTION

In a wireless communication system, a method for estimating a transmitted signal is disclosed. A wireless signal is received that includes a pilot channel and at least one other channel. A transmitted signal is estimated using an equalizer and the received wireless signal. Taps of a filter of the equalizer are adapted through use of a channel estimate. The channel estimate is calculated from the pilot channel. The pilot channel and the at least one other channel are separated.

The equalizer includes a plurality of taps. In some embodiments, adapting the taps involves calculating new equalizer weights that correspond to the taps. A channel estimate is used during adaptation of the taps. The channel estimate is calculated from the pilot channel, which was included with the at least one other channel. A noise estimate may also be used during adaptation of the taps. The noise estimate is also calculated from the pilot channel. In some embodiments, the received signal includes a plurality of multipath signals, and the channel estimate and the noise estimate are calculated from pilot symbols obtained from at least some of the multipath signals.

The method may be implemented in a variety of communication receivers. For example, the method may be implemented in a mobile station. The method may also be implemented by a base station.

A digital filter may be used to implement the equalizer. One possible digital filter that may be used is an FIR filter. An IIR filter may also be used. In addition, the filtering may be performed in the frequency domain.

In some embodiments, the taps may be adapted once every pilot symbol interval. The taps may be adapted N times every pilot symbol interval, where N is any positive integer. In other embodiments, the taps may be adapted once every $N^{th}$ pilot symbol interval, where N is any positive integer.

A mobile station for use in a wireless communication system is also disclosed. The mobile station includes an adaptive equalizer for estimating a transmitted signal. The mobile station includes at least one antenna for receiving a wireless signal and a receiver in electronic communication with the at least one antenna. An equalizer estimates a transmitted signal. The equalizer includes a plurality of taps. An equalizer adaptation component adapts the taps. A channel estimate is used during adaptation of the taps. The channel estimate is calculated from a pilot channel that was included with at least one other channel. The mobile station also includes a component to separate the pilot channel and the at least one other channel.

The components of the mobile station are also applicable and may be used with other receiving systems. An apparatus is also generally disclosed for use in a wireless communication system that includes an adaptive equalizer for estimating a transmitted signal. The apparatus may be embodied in a mobile station, in a base station, or in any other system that needs to receive and process a wireless signal.

The systems and methods disclosed herein may be used to compensate for multipath propagation. Multipath signals are different versions of the same wireless signal that are generated by reflections from structures and natural formations. Multipath signals may have phase shifts that cause the signals to cancel each other out at certain locations. The loss of a signal due to the phase cancellation of multipath signals is known as fading. Fading is a problem in wireless systems because it disrupts user communications. For example, several multipath copies of a single wireless signal transmitted by a wireless communications device may be generated by reflections from trees and buildings. These multipath copies may combine and cancel each other out due to phase offset.

The systems and methods disclosed herein may also be helpful in optimizing the power used in a communication system. CDMA systems benefit from using power control. An adequate SNR must be maintained so that the signal may be separated from the noise. Since CDMA signals are not divided by frequency or time for a given link direction, the noise component of the ratio includes all other received CDMA signals. If the power of an individual CDMA signal is too high, it effectively drowns out all other CDMA signals. Power control is used on the uplink (transmission from the terminal to the base station) and on the downlink (transmission from the base station to the terminal). On the uplink, power control is used to maintain an appropriate power level for all user signals received at the base station. The power level of these received CDMA signals should be minimized, but still must be strong enough to maintain the appropriate SNR. On the downlink, power control is used to maintain an appropriate power level for all signals received at the various terminals. This minimizes interference between users in the same cell due to multipath signals. This also minimizes interference between users in adjacent cells. CDMA systems dynamically control the transmit power of the base station and the terminals to maintain the appropriate power level on the uplink and the downlink. Dynamic control is applied through open loop and closed loop control techniques that are known in the industry.

The range of the CDMA system is directly related to the common power level of the received signals because each additional signal adds noise to all of the other signals. The user noise component of the SNR is reduced when the average receive power level is lowered. Techniques that decrease CDMA signal power from the communications device directly increase the range of the CDMA system. Receive diversity is one technique used to minimize the required signal power. Lower signal power also lowers the cost of the user communications devices while increasing operational battery life as well as the range. Optimizing the power used may have additional benefits in high data rate systems where high data rates might only be supported if an appropriate SNR may be reached.

Communications systems are used for transmission of information from one device to another. Before transmission, information is encoded into a format suitable for transmission over a communication channel. The communication channel may be a transmission line or free space between the transmitter and the receiver. As the signal propagates through the channel, the transmitted signal is distorted by imperfections in the channel. Furthermore, the signal experiences degradation from noise and interference picked up during transmission. An example of interference commonly encountered in bandlimited channels is called inter-symbol interference (ISI). ISI occurs as a result of the spreading of a transmitted symbol pulse due to the dispersive nature of the channel, which results in an overlap of adjacent symbol pulses. The dispersive nature of the channel is a consequence of multipath propagation. At the receiver, the signal is processed and translated into the original pre-encoded form.
Both the transmitter and receiver are designed to minimize the effects of channel imperfections and interference.

Various receiver designs may be implemented to compensate for interference and noise caused by the transmitter and the channel. By way of example, an equalizer is a common choice for dealing with these problems. An equalizer may be implemented with a transversal filter, i.e. a delay line with T-second taps (where T is the time resolution of the equalizer filter). The contents of the taps are weighted and summed to generate an estimate of the transmitted symbol. The tap coefficients are adjusted to compensate for changes in the radio channel. The signal is coupled to a channel separation device such as a descrambler/despreader and to a decision-making device such as a decoder or a symbol slicer.

The ability of a receiver to detect a signal in the presence of noise is based on the ratio of the received signal power and the noise power, commonly known as the SNR or the carrier-to-interference ratio (C/I). Industry usage of these terms, or similar terms, is often interchangeable, however, the meaning is the same. Accordingly, any reference to C/I herein will be understood by those skilled in the art to encompass the broad concept of measuring the effects of noise at various points in the communications system.

Equalizers in wireless communication systems are designed to adjust to time-varying channel conditions. As the channel characteristics change, the equalizer adjusts its response accordingly. Such changes may include variations in the propagation medium or the relative motion of the transmitter and receiver, as well as other conditions. Equalizers that adapt to time-varying channel conditions are generally referred to as adaptive equalizers.

The word "exemplary" is used exclusively herein to mean "serving as an example, instance, or illustration." Any embodiment described herein as "exemplary" is not necessarily to be construed as preferred or advantageous over other embodiments. While the various aspects of the embodiments are presented in drawings, the drawings are not necessarily drawn to scale unless specifically indicated.

The following discussion develops the exemplary embodiments of a communication receiver with an adaptive equalizer by first discussing a spread-spectrum wireless communication system. A base station and a mobile station, as well as the communications sent therebetween, are then discussed. Then components of an embodiment of a subscriber unit are shown. Functional block diagrams are shown and described in relation to the transmission and reception of a wireless signal. Details regarding adaptation of the equalizer in the receiving system are also set forth. Included in the specification relating to the signal processing are illustrations and mathematical derivations. Exemplary methods for using and adapting the equalizer are then discussed.

Note that the exemplary embodiment is provided as an exemplar throughout this discussion; however, alternate embodiments may incorporate various aspects without departing from the scope of the present invention. Specifically, the present invention is applicable to a data processing system, a wireless communication system, a mobile IP network and any other system desiring to receive and process a wireless signal.

The exemplary embodiment employs a spread-spectrum wireless communication system. Wireless communication systems are widely deployed to provide various types of communication such as voice, data, and so on. These systems may be based on code division multiple access (CDMA), time division multiple access (TDMA), or some other modulation techniques. A CDMA system provides certain advantages over other types of systems, including increased system capacity.

A system may be designed to support one or more standards such as the "TIA/EIA/IS-95-B Mobile Station-Base Station Compatibility Standard for Dual-Mode Wideband Spread Spectrum Cellular System" referred to herein as the IS-95 standard, the standard offered by a consortium named "3rd Generation Partnership Project" referred to herein as 3GPP, and embodied in a set of documents including Document Nos. 3GPP TS 25.211, 3GPP TS 25.212, 3GPP TS 25.213, and 3GPP TS 25.214, 3GPP TS 25.302, referred to herein as the W-CDMA standard, the standard offered by a consortium named "3rd Generation Partnership Project 2" referred to herein as 3GPP2, and TR-45.5 referred to herein as the cdma2000 standard, formerly called IS-2000 MC. The standards cited hereinabove are hereby expressly incorporated herein by reference.

Each standard specifically defines the processing of data for transmission from base station to mobile, and vice versa. As an exemplary embodiment the following discussion considers a spread-spectrum communication system consistent with the cdma2000 standard of protocols. Alternate embodiments may incorporate another standard.

The systems and methods described herein may be used with high data rate communication systems. Throughout the following discussion a specific high data rate system is described for clarity. Alternate systems may be implemented that provide transmission of information at high data rates. For CDMA communications systems designed to transmit at higher data rates, such as a High Data Rate (HDR) communications system, a variable data rate request scheme may be used to communicate at the maximum data rate that the C/I may support. The HDR communications system is typically designed to conform to one or more standards such as the "cdma2000 High Rate Packet Data Air Interface Specification," 3GPP2 C.S0024, Version 2, October 27, 2000, promulgated by the consortium "3rd Generation Partnership Project 2." The contents of the aforementioned standard is incorporated by reference herein.

A receiver in an exemplary HDR communications system may employ a variable rate data request scheme. The receiver may be embodied in a subscriber station in communication with a land-based data network by transmitting data on an uplink to a base station (shown below). The base station receives the data and routes the data through a base station controller (BSC) (not shown) to the land-based network. Conversely, communications to the subscriber station may be routed from the land-based network to the base station via the BSC and transmitted from the base station to the subscriber unit on a downlink.

FIG. 1 serves as an example of a communications system 100 that supports a number of users and is capable of implementing at least some aspects of the embodiments discussed herein. Any of a variety of algorithms and methods may be used to schedule transmissions in system 100. System 100 provides communication for a number of cells 102A-102G, each of which is serviced by a corresponding base station 104A-104G, respectively. In the exemplary embodiment, some of the base stations 104 have multiple receive antennas and others have only one receive antenna. Similarly, some of the base stations 104 have multiple transmit antennas, and others have single transmit antennas. There are no restrictions on the combinations of transmit antennas and receive antennas. Therefore, it is possible for a base station 104 to have multiple transmit antennas and a single receive antenna, or to have multiple receive antennas and a single transmit antenna, or to have both single or multiple transmit and receive antennas.

Terminals 106 in the coverage area may be fixed (i.e., stationary) or mobile. As shown in FIG. 1, various terminals 106 are dispersed throughout the system. Each terminal 106 communicates with at least one and possibly more base stations 104 on the downlink and uplink at any given moment depending on, for example, whether soft handoff is employed or whether the terminal is designed and operated to (concurrently or sequentially) receive multiple transmissions from multiple base stations. Soft handoff in CDMA communications systems is well known in the art and is described in detail in U.S. Patent No. 5,101,501, entitled "Method and System for Providing a Soft Handoff in a CDMA Cellular Telephone System", which is assigned to the assignee of the present invention.

The downlink refers to transmission from the base station 104 to the terminal 106, and the uplink refers to transmission from the terminal 106 to the base station 104. In the exemplary embodiment, some of terminals 106 have multiple receive antennas and others have only one receive antenna. In FIG. 1, base station 104A transmits data to terminals 106A and 106J on the downlink, base station 104B transmits data to terminals 106B and 106J, base station 104C transmits data to terminal 106C, and so on.

FIG. 2 is a block diagram of the base station 202 and mobile station 204 in a communications system 100. The base station 202 is in wireless communication with the mobile station 204. As mentioned above, the base station 202 transmits signals to mobile stations 204 that receive the signals. In addition, mobile stations 204 may also transmit signals to the base station 202.

FIG. 3 is a block diagram of the base station 202 and mobile station 204 illustrating the downlink 302 and the uplink 304. The downlink 302 refers to transmissions from the base station 202 to the mobile station 204, and the uplink 304 refers to transmissions from the mobile station 204 to the base station 202.

FIG. 4 is a block diagram of the channels in an embodiment of the downlink 302. The downlink 302 includes the pilot channel 402, the sync channel 404, the paging channel 406 and the traffic channel 408. The downlink 302 illustrated is only one possible embodiment of a downlink 302 and it will be appreciated that other channels may be added or removed from the downlink 302.

Under one CDMA standard, described in the Telecommunications Industry Association's TIA/EIA/IS-95-A Mobile Stations-Base Station Compatibility Standard for Dual-Mode Wideband Spread Spectrum Cellular System, each base station 202 transmits pilot 402, sync 404, paging 406 and forward traffic 408 channels to its users. The pilot channel 402 is an unmodulated, direct-sequence spread spectrum signal transmitted continuously by each base station 202. The pilot channel 402 allows each user to acquire the timing of the channels transmitted by the base station 202, and provides a phase reference for coherent demodulation. The pilot channel 402 also provides a means for signal strength comparisons between base stations 202 to determine when to hand off between base stations 202 (such as when moving between cells 102).

The sync channel 404 conveys timing and system configuration information to the mobile station 204. The paging channel 406 is used to communicate with mobile stations 204 when they are not assigned to a traffic channel 408. The paging channel 406 is used to convey pages, that is, notifications of incoming calls, to the mobile stations 204. The traffic channel 408 is used to transmit user data and voice. Signaling messages are also sent over the traffic channel 408.

FIG. 5 is a block diagram of the channels in an embodiment of the uplink 304. The uplink 304 may include a pilot channel 502, an access channel 504 and a traffic channel 506. The uplink 304 illustrated is only one possible embodiment of an uplink and it will be appreciated that other channels may be added or removed from the uplink 304.

The uplink 304 of FIG. 5 includes a pilot channel 502. Recall that third-generation (3G) wireless radiotelephone communication systems have been proposed in which an uplink 304 pilot channel 502 is used. For example, in the currently proposed cdma2000 standard, the mobile station 204 transmits a Reverse Link Pilot Channel (R-PICH) that the base station 202 uses for initial acquisition, time tracking, rake-receiver coherent reference recovery, and power control measurements. Thus, systems and methods herein are applicable to pilot signals on the downlink 302 and on the uplink 304.

The access channel 504 is used by the mobile station 204 to communicate with the base station 202 when the mobile 204 does not have a traffic channel 506 assigned. The uplink traffic channel 506 is used to transmit user data and voice. Signaling messages are also sent over the uplink traffic channel 506.

An embodiment of a mobile station 204 is shown in a subscriber unit system 600 illustrated in the functional block diagram of FIG. 6. The system 600 includes a processor 602 which controls operation of the system 600. The processor 602 may also be referred to as a CPU. Memory 604, which may include both read-only memory (ROM) and random access memory (RAM), provides instructions and data to the processor 602. A portion of the memory 604 may also include non-volatile random access memory (NVRAM).

The system 600, which is typically embodied in a wireless communication device such as a cellular telephone, also includes a housing 606 that contains a transmitter 608 and a receiver 610 to allow transmission and reception of data, such as audio communications, between the system 600 and a remote location, such as a cell site controller or base station 202. The transmitter 608 and receiver 610 may be combined into a transceiver 612. An antenna 614 is attached to the housing 606 and electrically coupled to the transceiver 612. Additional antennas (not shown) may also be used. The operation of the transmitter 608, receiver 610 and antenna 614 is well known in the art and need not be described herein.

The system 600 also includes a signal detector 616 used to detect and quantify the level of signals received by the transceiver 612. The signal detector 616 detects such signals as total energy, pilot energy per pseudonoise (PN) chips, power spectral density, and other signals, as is known in the art.

A state changer 626 of the system 600 controls the state of the wireless communication device based on a current state and additional signals received by the transceiver 612 and detected by the signal detector 616. The wireless communication device is capable of operating in any one of a number of states.

The system 600 also includes a system determinator 628 used to control the wireless communication device and determine which service provider system the wireless communication device should transfer to when it determines the current service provider system is inadequate.

The various components of the system 600 are coupled together by a bus system 630 which may include a power bus, a control signal bus, and a status signal bus in addition to a data bus. However, for the sake of clarity, the various busses are illustrated in FIG. 6 as the bus system 630. The system 600 may also include a digital signal processor (DSP) 607 for use in processing signals. One skilled in the art will appreciate that the system 600 illustrated in FIG. 6 is a functional block diagram rather than a listing of specific components.

The methods disclosed herein for using an adaptive equalizer in a communication receiver may be implemented in an embodiment of a subscriber unit 600. The disclosed systems and methods may also be implemented in other communication systems with a receiver, such as a base station 202. If a base station 202 is being used to implement the disclosed systems and methods, the functional block diagram of FIG. 6 may also be used to describe components in a functional block diagram of a base station 202.

FIG. 7 is a functional block diagram illustrating the transmission of a wireless signal. As shown, the wireless signal includes a pilot channel 702 and other orthogonal channels 704. Additional non-orthogonal channels 706 may also be included in the wireless signal. Examples of non-orthogonal channels include the synchronization channel (SCH), channels scrambled by the secondary scrambling code (SSC) in WCDMA, and channels spread by quasi-orthogonal sequences (QOS) in cdma2000.

The orthogonal channels are provided to an orthogonal spreading component 708. Both the orthogonal and non-orthogonal channels are then provided to a channel gain component 710, which sets up a gain for the channel. The outputs from the channel gain components 710 are summed together as shown by the summer 712. As shown in FIG. 7, the non-orthogonal channel may be time-division multiplexed (TDM) 711. In other embodiments, one or more of the orthogonal channels may be time-division multiplexed.

The non-orthogonal channels 706 do not have orthogonal spreading components. Some non-orthogonal channels 706 (e.g., the synchronization channel) may be fed directly into the channel gain component 710. Other non-orthogonal channels 706 (e.g., channels spread by quasi-orthogonal sequences in cdma2000) are spread in a non-orthogonal way and then fed into the channel gain component 710. The output of the channel gain component 710 is summed with the summer 712.

The summed signal is fed into the pseudorandom noise (PN) scrambling component 714. A baseband filter 716 takes the output from the PN scrambling component 714 and provides the filtered output 723 to a transmitter 718. The transmitter 718 includes an antenna 720. The wireless signal then enters the radio channel 722.

The functional block diagram of FIG. 7 illustrating the transmission of a wireless signal may be implemented in various components. For example, the base station 202 embodies one form of the block diagram illustrated in FIG. 7. In addition, the mobile station 204 also implements a form of the transmission block diagram.

FIG. 8 is a functional block diagram illustrating the reception of a wireless signal 801. A receiver 802 receives the wireless signal 801 through the use of an antenna 804. The received signal contains a distorted version of the transmitted pilot channel and other channels. The received signal is converted to baseband and fed into a matched filter 806 that is matched to the impulse response of the baseband filter in the transmitter. The output 808 of the matched filter 806 is provided to an equalizer 810. The signal output 808 from the matched filter 806 still includes all the different channels that were transmitted.

The equalizer 810 shall correct for distortions that have occurred during transmission over the radio channel 722. As discussed previously, these distortions may be caused by interference, channel imperfections, and the like. The equalizer 810 then generates an estimate of the transmitted signal. In one embodiment, the equalizer 810 includes a filter implemented through use of a number of equalizer taps 811. The taps may be equispaced or non-equispaced. In another embodiment, equalization is performed in the frequency domain.

An equalizer adaptation component 812 allows the equalizer 810 to adapt to time-varying channel 722 conditions. In Figure 8, the output 808 of the matched filter 806 is also provided to the equalizer adaptation component 812. The equalizer adaptation component 812 adapts the equalizer 810 to compensate for changes in channel 722 conditions. Typically, adapting the equalizer involves calculating equalizer filter weights 826 that are used by the equalizer 810. The weights 826 correspond to the equalizer taps 811.

Advantageously, the equalizer adaptation component 812 adapts the equalizer 810 while the receiver 802 is receiving a wireless signal 801 that includes a pilot channel and other channels. Thus, although in other systems currently in use, adaptive equalizers adapt based on signals that include the pilot channel only, the systems and methods disclosed herein may train and adapt even when a pilot channel simultaneously coexists with other channels. A functional block diagram of an exemplary embodiment of the equalizer adaptation component 912 is provided in Figure 9 and described in connection therewith.

The equalizer output 812 is provided to the PN descrambling 814 and despreading 816 components. The channels 818, including the pilot and other channels, are despread by despreading component 816 and then provided for further processing 820.

FIG. 9 is a functional block diagram of an embodiment of the equalizer adaptation component 912. The equalizer adaptation component 912 includes a plurality of fingers 902. In Figure 9, N fingers 902 are shown, where N is any positive integer.

As stated previously, the output signal 808 from the matched filter 806 includes all of the different channels that were transmitted. In addition, the output 808 of the matched filter 806 includes a plurality of multipath signals. As described previously, multipath signals are different versions of the same wireless signal that are generated by reflections from structures and natural formations. Multipath signals are temporally offset from one another.

In FIG. 9, the output 808 of the matched filter 806 is fed into each finger 902. The signal is delayed by an appropriate value 900 for each finger 902. The delayed signal is then provided to the PN descrambling component 904 and the pilot despreading component 906 within the assigned finger 902. In one embodiment, the pilot despreading component 906 within each finger 902 may be an accumulating component. The output 908 of each finger 902 in the equalizer adaptation component 912 includes estimated pilot symbols from a single multipath signal within the matched filter 806 output 808.

The PN descrambling components 906 within the fingers 902 may be conceptually similar to the PN descrambling component 814 shown in Figure 8. However, the PN descrambling components 906 within the fingers 902 are temporally offset from the PN descrambling component 814 shown in Figure 8.

In some embodiments, some of the multipath signals within the matched filter 806 output 808 may not be assigned to a finger 902. For example, the number of multipath signals may be greater than the number of available fingers 902, or a multipath signal may be too weak to be assigned to a finger 902.

The outputs 908 of the various fingers 902 are then provided to a channel estimation component 910 and to a noise parameter estimation component 912. The channel estimation component 910 generates channel estimates 914, and the noise parameter estimation component 912 generates estimates 916 of parameters of the noise. The channel estimates 914 could include, for example, estimates of the channel coefficients for each multipath component. The noise parameter estimates 916 could include, for example, an estimate of the noise covariance matrix.

The channel estimates 914 and noise parameter estimates 916 are then provided to a matrix construction component 918. The matrix construction component 918 constructs a channel estimates matrix 920 and a noise parameter estimates matrix 922. The channel estimates matrix 920 and the noise parameter estimates matrix 922 are then provided to a weight calculation component 924. The weight calculation component 924 uses the channel estimates matrix 920, the noise parameter estimates matrix 922, and a known matrix 926 from a lookup table 928 to calculate the equalizer weights 826 that are provided to the equalizer 810. The known matrix 926 is a function of the PN descrambling component 814 and the despreading component 816.

Referring to FIGS. 7 through 9, the following provides a mathematical description and background of various signals, formulas and algorithms that may be used.

The discrete-time representation of the over-sampled transmit signal 723 may be written as shown in Formula 1.

$$\mathbf{s}=\mathbf{H}\cdot\mathbf{P}\cdot\mathbf{W}\cdot\mathbf{d} \qquad \textbf{Formula 1.}$$

The term d in Formula 1 includes all the symbols from all channels, and is defined in Formula 2.

$$\mathbf{d}=\left[\mathbf{d}^{(0)\mathrm{T}},\mathbf{d}^{(1)\mathrm{T}},\ldots,\mathbf{d}^{(N-1)\mathrm{T}}\right]^{\mathrm{T}} \qquad \textbf{Formula 2.}$$

The term W in Formula 1 is defined in Formulas 3-5.

$$\mathbf{W}=\left[\mathbf{W}^{(0)},\mathbf{W}^{(1)},\ldots,\mathbf{W}^{(N-1)}\right] \qquad \textbf{Formula 3.}$$

$$\mathbf{W}^{(u)}\in C^{(N(2K+1))\times(2K+1)},\quad u=1\ldots N-1 \qquad \textbf{Formula 4.}$$

$$\left[\mathbf{W}^{(u)}\right]_{i+(j-1)N,j}=\begin{cases}w_i^{(u,N)}\cdot g_j^u & \text{for}\quad \mathrm{i}=1\ldots\mathrm{N};\ \mathrm{j}=1\ldots 2\mathrm{K}+1\\ 0 & \text{else}\end{cases} \qquad \textbf{Formula 5.}$$

Formula 4 indicates that W is a complex matrix with N(2*K*+1) rows and 2*K*+1 columns. The term w in Formula 5 is the spreading code. Examples of spreading codes include Walsh codes, OVSF codes, and quasi-orthogonal codes. The term g in Formula 5 is the channel gain. The term *u* in Formula 5 is the user index. The term *N* in Formulas 3-5 is the length of the spreading code. The term *i* in Formula 5 is the index of the chip in the spreading code. The term j in Formula 5 is the index of the symbol.

The term P in Formula 1 is defined in Formulas 6-7.

$$\mathbf{P}\in C^{(N(2K+1))\times(N(2K+1))}\qquad \text{diagonal} \qquad \textbf{Formula 6.}$$

$$\left[\mathbf{P}\right]_{i+(j-1)N,i+(j-1)N}=\begin{cases}p_i^{(j,N)} & \text{for}\quad \mathrm{i}=1\ldots\mathrm{N};\ \mathrm{j}=1\ldots 2\mathrm{K}+1\\ 0 & \text{else}\end{cases} \qquad \textbf{Formula 7.}$$

The term $p_i$ in Formula 7 is the scrambling chip with the index i.

The term H in Formula 1 is defined in Formulas 8-9.

$$\mathbf{H} \in C^{(\{N(2K+1)-1\}\Omega+2B+1)\times(N(2K+1))}$$ **Formula 8.**

$$[\mathbf{H}]_{i+(j-1)\Omega,j} = \begin{cases} h_i & \text{for} \quad \mathrm{i}=1\ldots 2\mathrm{B}+1;\ \mathrm{j}=1\ldots N(2\mathrm{K}+1) \\ 0 & \text{else} \end{cases}$$ **Formula 9.**

The term $h_i$ in Formula 9 is the baseband filter coefficient with the index i.

The multipath channel 722 has an impulse response as defined in Formula 10.

$$f[m] = \sum_{i=0}^{P-1} \alpha_i \cdot \delta[m-i]$$ **Formula 10.**

In Formula 10, the term $\alpha_i$, is the complex baseband channel gain.

The received signal 801 may be written as shown in Formula 11.

$$\mathbf{r} = \mathbf{A}\cdot\mathbf{s}+\mathbf{v} = \mathbf{A}\cdot\mathbf{H}\cdot\mathbf{P}\cdot\mathbf{W}\cdot\mathbf{d}+\mathbf{v}$$ **Formula 11.**

In Formula 11, the term v is a noise vector. The term A is defined in Formula 12. In Formula 12, the term A is expressed in terms of the complex baseband channel gains.

$$\mathbf{A} = \begin{bmatrix} \alpha_0 & 0 & \cdots & \cdots & \cdots & \cdots & \cdots & \cdots & \cdots & 0 \\ \ddots & \ddots & \ddots & \ddots & \ddots & \ddots & \ddots & \ddots & \ddots & \ddots \\ \alpha_{P-2} & \cdots & \alpha_0 & 0 & \cdots & \cdots & \cdots & \cdots & \cdots & 0 \\ \alpha_{P-1} & \alpha_{P-2} & \cdots & \alpha_0 & 0 & 0 & \cdots & \cdots & \cdots & 0 \\ 0 & \alpha_{P-1} & \alpha_{P-2} & \cdots & \alpha_0 & 0 & 0 & \cdots & \cdots & 0 \\ \ddots & \ddots & \ddots & \ddots & \ddots & \ddots & \ddots & \ddots & \ddots & \ddots \\ 0 & 0 & 0 & \cdots & \cdots & 0 & \alpha_{P-1} & \alpha_{P-2} & \cdots & \alpha_0 \\ 0 & \cdots & \cdots & \cdots & \cdots & \cdots & 0 & \alpha_{P-1} & \cdots & \alpha_1 \\ \ddots & \ddots & \ddots & \ddots & \ddots & \ddots & \ddots & \ddots & \ddots & \ddots \\ 0 & \cdots & \cdots & \cdots & \cdots & \cdots & \cdots & \cdots & 0 & \alpha_{P-1} \end{bmatrix}$$ **Formula 12.**

A composite chip signal may be defined as shown in Formula 13.

$$\mathbf{b} = \mathbf{P}\cdot\mathbf{W}\cdot\mathbf{d}$$ **Formula 13.**

Thus, the term b in Formula 13 includes symbols (d) from all channels, their spreading codes (W), and their scrambling codes (P). Formula 11 may therefore be rewritten as shown in Formula 14.

$$\mathbf{r} = \mathbf{A} \cdot \mathbf{H} \cdot \mathbf{b} + \mathbf{v}$$ **Formula 14.**

If the equalizer 810 is operated in chip level, in order to estimate the chip signal at time 0, it is only necessary to consider the chip signals of limited range around 0 with chip indices m as shown in Formula 15.

$$m \in \{-M, -(M-1), \ldots -1, 0, 1, \ldots, (M-1), M\}$$ **Formula 15.**

Then Formula 11 may be rewritten as shown in Formula 16.

$$\mathbf{r}_c = \mathbf{A}_c \cdot \mathbf{H}_c \cdot \mathbf{b}_c + \mathbf{v}_c$$ **Formula 16.**

Note that $r_C$, $A_C$, $H_C$, and $v_C$ are sub-matrices of r, A, H, and v, respectively. The term $b_c$ in Formula 16 is defined in Formula 17.

$$\mathbf{b}_c == [b[-M], b[-M+1], \ldots, b[M]]^T$$ **Formula 17.**

The term $H_C$ in Formula 16 is defined in Formulas 18-19. The term $H_c$ corresponds to the known matrix 928 in FIG. 9.

$$\mathbf{H}_c \in C^{(2M\Omega+2B+1)\times(2M+1)}$$ **Formula 18.**

$$[\mathbf{H}_c]_{i+(j-1)\Omega, j} = \begin{cases} h_i & \text{for} \quad \mathrm{i} = 1 \ldots 2\mathrm{B}+1; \mathrm{j} = 1 \ldots (2\mathrm{M}+1) \\ 0 & \text{else} \end{cases}$$ **Formula 19.**

The term $A_c$ in Formula 16 is defined in Formula 20. The term $A_c$ corresponds to the channel estimates matrix 920 in FIG. 9.

$$\mathbf{A}_c = \begin{bmatrix} \alpha_0 & 0 & \cdots & \cdots & \cdots & \cdots & \cdots & \cdots & \cdots & 0 \\ \ddots & \ddots & \ddots & \ddots & \ddots & \ddots & \ddots & \ddots & \ddots & \ddots \\ \alpha_{P-2} & \cdots & \alpha_0 & 0 & \cdots & \cdots & \cdots & \cdots & \cdots & 0 \\ \alpha_{P-1} & \alpha_{P-2} & \cdots & \alpha_0 & 0 & 0 & \cdots & \cdots & \cdots & 0 \\ 0 & \alpha_{P-1} & \alpha_{P-2} & \cdots & \alpha_0 & 0 & 0 & \cdots & \cdots & 0 \\ \ddots & \ddots & \ddots & \ddots & \ddots & \ddots & \ddots & \ddots & \ddots & \ddots \\ 0 & 0 & 0 & \cdots & \cdots & 0 & \alpha_{P-1} & \alpha_{P-2} & \cdots & \alpha_0 \\ 0 & \cdots & \cdots & \cdots & \cdots & \cdots & 0 & \alpha_{P-1} & \cdots & \alpha_1 \\ \ddots & \ddots & \ddots & \ddots & \ddots & \ddots & \ddots & \ddots & \ddots & \ddots \\ 0 & \cdots & \cdots & \cdots & \cdots & \cdots & \cdots & \cdots & 0 & \alpha_{P-1} \end{bmatrix}_{(2M\Omega+2B+P)\times(2M\Omega+2B+1)}$$

**Formula 20.**

The term $r_c$ in Formula 16 corresponds to the input 808 to the equalizer 810. The equalizer weights 826 may be denoted as w, and the output 813 of the equalizer 810 may be denoted as y. The output 813 of the equalizer 810 may then be written as shown in Formula 21.

$$y = \mathbf{w}^H \cdot \mathbf{r}_c = \mathbf{w}^H \cdot \mathbf{A}_c \cdot \mathbf{H}_c \cdot \mathbf{b}_c + \mathbf{w}^H \cdot \mathbf{v}_c$$

**Formula 21.**

Note that $r_c$ is clocked at rate $\Omega/T_c$, y is clocked at the chip rate, and w is updated at the pilot symbol rate.

The term w in Formula 21 is defined in Formula 22. As stated previously, w denotes the equalizer weights 826. Thus, Formula 22 is used by the weight calculation component 924 to calculate the equalizer weights 826.

$$\mathbf{w} = \left(\mathbf{A}_c \cdot \mathbf{H}_c \cdot \mathbf{H}_c^H \cdot \mathbf{A}_c^H + \Lambda\right)^{-1} \cdot \mathbf{A}_c \cdot \mathbf{H}_c \cdot \vec{e}_{ref}$$

**Formula 22.**

In Formula 22, the term Λ is the covariance matrix of the noise vector $v_c$. The term Λ corresponds to the noise parameter estimates matrix 922 in FIG. 9. The term $A_c$ corresponds to the channel estimates matrix 920 in FIG. 9. The term $\bar{e}_{ref}$ is given by Formula 23.

$$\vec{e}_{ref} = \left[\underbrace{0 \ \cdots \ 0}_{M} \ 1 \ \underbrace{0 \ \cdots \ 0}_{M}\right]^T$$

**Formula 23.**

The above mathematical discussion is provided as an example to enable those skilled in the art to make or use the present invention. However, those skilled in the art will recognize that various modifications may be made to the various signals, formulas, and algorithms described above without departing from the spirit or scope of the invention.

In one embodiment, the equalizer 810 may be implemented by a Finite Impulse Response (FIR) filter. FIG. 10 is a block diagram illustrating an implementation of an FIR filter 1000. As described previously and shown in Figure 10, rc is the input 808 to the FIR filter 1000, and y is the output of the FIR filter 1000. There are k equalizer weights 826 shown in the FIR filter 1000 of FIG. 10, each equalizer weight 826 being denoted as w(k).

Other components may be used within the equalizer 810 besides an FIR filter. For example, an Infinite Impulse Response (IIR) may be used. In addition, the filtering may be performed in the frequency domain.

FIG. 11 is a flow diagram of a method 1100 for using an adaptive equalizer 810 when receiving a wireless signal 801 by a mobile station 204. The method of FIG. 11 may also be used by a base station 202 and other types of receivers in a wireless communication system 100. A wireless signal 801 is received 1102 that includes a pilot channel 402 and other channels. The pilot channel 402 and other channels may be transmitted continuously. In addition, the pilot channel 402 and other channels may not be transmitted continuously. In addition, if a base station 202 was implementing the method 1100, fewer channels would be included. For example, if the wireless signal 801 were being received by a base station 202, the wireless signal 801 may include a pilot 502, access 504, and traffic 506 channels. As shown, the method 1100 may easily be adapted for use in various receivers in wireless communication systems 100.

The received signal 801 is filtered 1104 using the matched filter 806. At the output of the matched filter 806, a determination 1106 is made as to whether new equalizer weights 826 should be calculated. (As described previously, the equalizer weights 826 correspond to the equalizer taps 811.) Different settings may be made for making this determination 1106. For example, the method 1100 may be configured to calculate new equalizer weights 826 every pilot symbol interval. Alternatively, the method 1100 may be configured to calculate new equalizer weights 826 once every Nth pilot symbol interval, where N is a positive integer. The value of N may be static or it may be dynamic. The method may be configured to adapt the equalizer taps 811 multiple times every pilot symbol interval. It will be appreciated by those skilled in the art that, depending on the environment, it may be necessary to calculate new equalizer weights 826 more or less frequently. For example, in low velocity situations, it may not be necessary to calculate new equalizer weights 826 as often as when the system is being used in high velocity situations.

If it is determined 1106 that new equalizer weights 826 should be calculated, the output 808 from the matched filter 806 is used to calculate 1108 new equalizer weights 826. A flow chart of an exemplary embodiment of a method for calculating 1108 new equalizer weights 826 is shown in Figure 12 and described in connection therewith. Once the new weights 826 are calculated 1108, the taps 811 are updated 1110.

Whether or not it is determined 1106 that new equalizer weights 826 should be calculated 1108, the output 808 of the matched filter 806 is provided to an equalizer 810 for equalization 1112. As stated earlier, the equalizer 810 corrects for distortions to the signal 801 and generates an estimate of the transmitted signal. The equalizer 810 includes a filter implemented through use of a number of taps 811 represented by w herein. The equalizer 810 loads the current values of the taps 811 in order to implement the filter. If the equalizer taps 811 are updated, the equalizer 810 loads the updated values of the taps 811. Those skilled in the art will appreciate the various ways in which the equalizer 810 may be made aware of new values of the taps 811 being available.

The equalizer output 813 is provided to the PN descrambling component 814 wherein PN descrambling is performed 1114. Then despreading is performed 1116 to obtain the pilot and other channels. Finally, other channels are recovered/decoded 1118.

FIG. 12 is a flow diagram of a method 1200 for calculating new equalizer weights 826. The method 1200 may be carried out by the equalizer adaptation component 812. The method 1200 begins when the output 808 of the matched filter 806 is received 1202. As described previously, the output 808 of the matched filter 806 includes a plurality of multipath signals. Multipath signals are different versions of the same wireless signal that are generated by reflections from structures and natural formations. Multipath signals are temporally offset from one another.

Each finger 902 of the equalizer adaptation component 912 is then assigned to time-align with a multipath signal within the output 808. This may be accomplished by delaying 1204 the output 808 of the matched filter 806 with different time delays 900. Each delayed version of the matched filter output 808 corresponds to a different multipath signal. Each finger 902 then performs 1206 PN descrambling and pilot despreading to obtain noisy pilot symbols from the corresponding multipath signal. The noisy pilot symbols obtained from the different multipath signals are then used to perform 1208 channel estimation and noise parameter estimation. The matrices used to calculate the equalizer weights 826 are then obtained 1210. These matrices may include the channel estimates matrix 920, the noise estimates matrix 922, and the known matrix 926 that is a function of the PN descrambling component 814 and the despreading component 816. In one embodiment, the channel estimates matrix 920 is $A_c$ (as defined in Formula 20), the noise estimates matrix 920 is A, and the known matrix 926 is $H_c$ (as defined in Formulas 18-19). The equalizer weights 826 are then calculated 1212. In one embodiment, the equalizer weights 826 are calculated according to Formula 22.

If the wireless signal 801 were being sent on the uplink 304, the components illustrated herein may be used in a base station 202. It is to be understood that the inventive principles herein may be used with a variety of components whether the wireless signal 801 is being received by a mobile station 204, a base station 202, or any other component in a wireless communications system 100. Thus, the embodiment of a mobile station 204 is an exemplary embodiment of the systems and methods but it is understood that the systems and methods may be used in a variety of other contexts.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array signal (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor may read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The methods disclosed herein comprise one or more steps or actions for achieving the described method. The method steps and/or actions may be interchanged with one another without departing from the scope of the present invention. In other words, unless a specific order of steps or actions is required for proper operation of the embodiment, the order and/or use of specific steps and/or actions may be modified without departing from the scope of the present invention.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

According to an aspect of the present invention, there is provided in a wireless communication system, a method for estimating a transmitted signal, the method comprising:

receiving a wireless signal that comprises a pilot channel and at least one other channel;
estimating a transmitted signal using an equalizer and the received wireless signal, wherein the equalizer includes a filter with a plurality of taps;
adapting the taps through use of a channel estimate, wherein the channel estimate is calculated from the pilot channel, and wherein the pilot channel was transmitted with the at least one other channel; and
separating the pilot channel and the at least one other channel.

Adapting the taps may comprise calculating new equalizer weights that correspond to the taps.

A noise estimate may also be used during adaptation of the taps, wherein the noise estimate is calculated from the pilot channel.

The received signal may comprise a plurality of multipath signals, and the channel estimate and the noise estimate may be calculated from pilot symbols obtained from more than one of the plurality of multipath signals.

The pilot channel may be code division multiplexed.

The wireless signal may further comprise orthogonal and non-orthogonal channels.

The method may be implemented by a mobile station.

The method may be implemented by a base station.

The equalizer may comprise an FIR filter.

The equalizer may comprise an IIR filter.

Filtering may be performed in the frequency domain.

The taps may be adapted once every pilot symbol interval.

The taps may be adapted once every Nth pilot symbol interval, where N is any positive integer greater than one.
The taps may be adapted N times every pilot symbol interval, where N is any positive integer.
The acts may be performed in parallel.
The taps may be equispaced.
The taps may be non-equispaced.
The pilot channel may be transmitted continuously.
The pilot channel may be not transmitted continuously.
The at least one other channel may be transmitted continuously.
The at least one other channel may be not transmitted continuously.
The at least one other channel may comprise a traffic channel.
According to an aspect of the present invention, there is provided a mobile station for use in a wireless communication system wherein the mobile station estimates a transmitted signal, the mobile station comprising:

at least one antenna for receiving a wireless signal that comprises a pilot channel and at least one other channel;
a receiver in electronic communication with the at least one antenna;
an equalizer for estimating the transmitted signal, wherein the equalizer includes a filter with a plurality of taps;
an equalizer adaptation component for adapting the taps through use of a channel estimate, wherein the channel estimate is calculated from the pilot channel, and wherein the pilot channel was included with the at least one other channel; and
a component to separate the pilot channel and the at least one other channel.

Adapting the taps may comprise calculating new equalizer weights that correspond to the taps.
A noise estimate may also be used during adaptation of the taps, and the noise estimate may be calculated from the pilot channel.
The received signal may comprise a plurality of multipath signals, and the channel estimate and the noise estimate may be calculated from pilot symbols obtained from more than one of the plurality of multipath signals.
The equalizer may comprise an FIR filter.
The equalizer may comprise an IIR filter.
Filtering may be performed in the frequency domain.
The taps may be adapted once every pilot symbol interval.
The taps may be adapted once every Nth pilot symbol interval, where N is any positive integer greater than one.
The taps may be adapted N times every pilot symbol interval, where N is any positive integer.
The pilot channel may be code division multiplexed.
According to an aspect of the present invention, there is provided an apparatus for use in a wireless communication system wherein the apparatus estimates a transmitted signal, the apparatus comprising:

at least one antenna for receiving a wireless signal that comprises a pilot channel and at least one other channel;
a receiver in electronic communication with the at least one antenna;
an equalizer for estimating the transmitted signal, wherein the equalizer includes a filter with a plurality of taps;
an equalizer adaptation component for adapting the taps through use of a channel estimate, wherein the channel estimate is calculated from the pilot channel, and wherein the pilot channel was included with the at least one other channel; and
a component to separate the pilot channel and the at least one other channel.

Adapting the taps may comprise calculating new equalizer weights that correspond to the taps.
A noise estimate may also be used during adaptation of the taps, and the noise estimate may be calculated from the pilot channel.
The received signal may comprise a plurality of multipath signals, and the channel estimate and the noise estimate may be calculated from pilot symbols obtained from more than one of the plurality of multipath signals.
The equalizer may comprise an FIR filter.
The equalizer may comprise an IIR filter.
Filtering may be performed in the frequency domain.
The taps may be adapted once every pilot symbol interval.
The taps may be adapted once every Nth pilot symbol interval, where N is any positive integer greater than one.
The taps may be adapted N times every pilot symbol interval, where N is any positive integer.
The pilot channel may be code division multiplexed.
The received wireless signal may be transmitted on a downlink and the apparatus may be embodied in a mobile station.
The received wireless signal may be transmitted on an uplink and the apparatus may be embodied in a base station.

According to an aspect of the invention, there is provided a mobile station for use in a wireless communication system wherein the mobile station estimates a transmitted signal, the mobile station comprising:

means for receiving a first wireless signal that comprises a pilot channel and at least one other channel;
means for estimating the transmitted signal, wherein the estimating means includes a plurality of taps;
means for adapting the taps through use of a channel estimate, wherein the channel estimate is calculated from the pilot channel, and wherein the pilot channel was included with the at least one other channel; and
means for separating the pilot channel and the at least one other channel.

## Claims

**1.** A method for using an adaptive equalizer when receiving a wireless signal, comprising:

receiving a wireless signal, the wireless signal comprising a pilot channel and least one other channel;
filtering the received signal, using a matched filter;
at the output of the matched filter, determining whether new equalizer weights should be calculated;
if new equalizer weights are to be calculated, using the output from the matched filter to calculate new equalizer weights and updating the taps with the new equalizer weights; and
providing the output of the matched filter to an equalizer for equalization.

**2.** A method as claimed in claim 1, wherein the pilot channel and the at least one other channel are transmitted continuously.

**3.** A method as claimed in claim 1, wherein the pilot channel and the at least one other channel are not transmitted continuously.

**4.** A method as claimed in claim 1, wherein the step of determining whether new equalizer weights should be calculated comprises determining that new equalizer weights should be calculated every pilot symbol interval.

**5.** A method as claimed in claim 1, wherein the step of determining whether new equalizer weights should be calculated comprises determining that new equalizer weights should be calculated once every Nth pilot symbol interval, where N is a positive integer.

**6.** A method as claimed in claim 1, wherein the step of determining whether new equalizer weights should be calculated comprises determining that new equalizer weights should be calculated multiple times every pilot symbol interval.

**7.** A method as claimed in claim 1, further comprising:

providing the output of the equalizer to a PN descrambling component;
performing PN descrambling and despreading to obtain the pilot channel and the at least one other channel; and
decoding the at least one other channel.

**8.** A method for calculating new equalizer weights, comprising:

receiving an output from a matched filter, the output including a plurality of multipath signals;
delaying the output of the matched filter with different time delays to obtain a plurality of delayed versions of the matched filter output, wherein each delayed version corresponds to a different multipath signal;
performing PN descrambling and pilot despreading to obtain pilot symbols from each delayed version;
performing channel estimation and noise parameter estimation using the pilot symbols;
obtaining matrices used to calculate the equalizer weights;
calculating the equalizer weights.

**9.** A method as claimed in claim 8, wherein the matrices include a channel estimates matrix $A_c$, a noise estimates matrix A, and a known matrix $H_c$ that is a function of a PN descrambling component and a despreading component.

**10.** An apparatus, comprising:

means for receiving a wireless signal, the wireless signal comprising a pilot channel and least one other channel;
means for filtering the received signal, using a matched filter;
at the output of the matched filter, means for determining whether new equalizer weights should be calculated;
if new equalizer weights are to be calculated, means for using the output from the matched filter to calculate new equalizer weights and updating the taps with the new equalizer weights; and
means for providing the output of the matched filter to an equalizer for equalization.

**11.** An apparatus, comprising:

means for receiving an output from a matched filter, the output including a plurality of multipath signals;
means for delaying the output of the matched filter with different time delays to obtain a plurality of delayed versions of the matched filter output, wherein each delayed version corresponds to a different multipath signal;
means for performing PN descrambling and pilot despreading to obtain pilot symbols from each delayed version;
means for performing channel estimation and noise parameter estimation using the pilot symbols;
means for obtaining matrices used to calculate the equalizer weights;
means for calculating the equalizer weights.

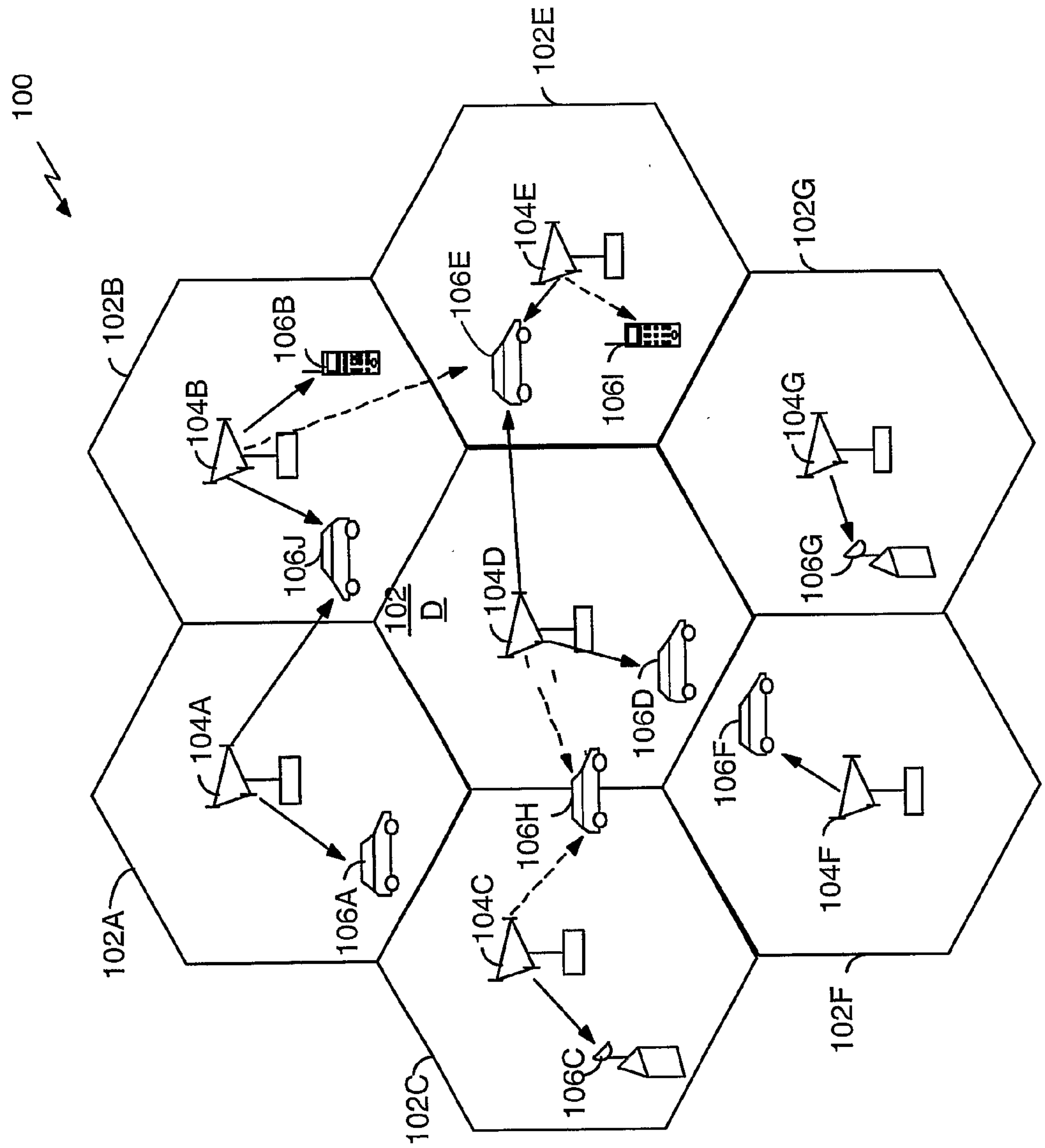
100
102A
102B
102C
102
D
102E
102F
102G
104A
104B
104C
104D
104E
104F
104G
106A
106B
106C
106D
106E
106F
106G
106H
106I
106J

FIG. 1

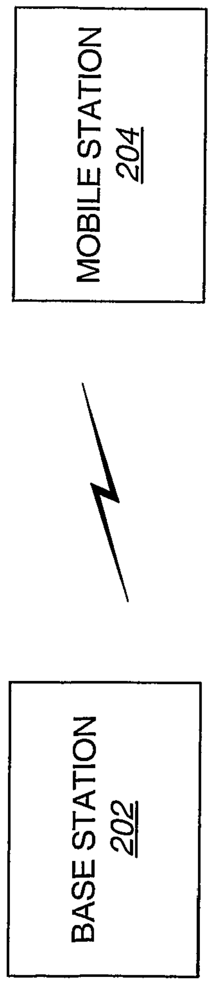
BASE STATION
202
MOBILE STATION
204

FIG. 2

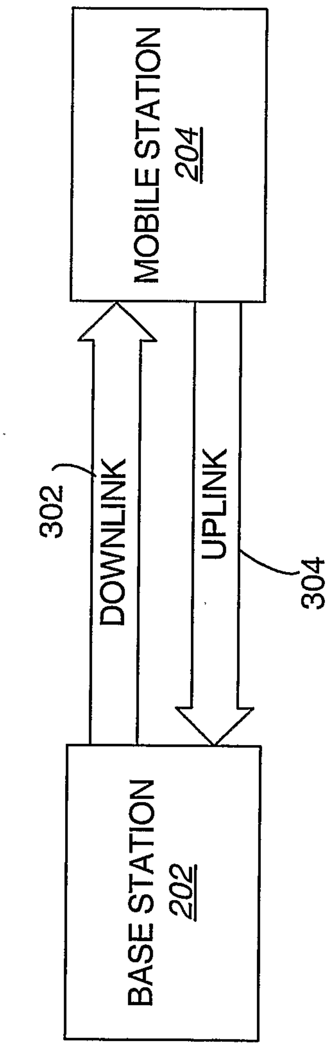
BASE STATION
202
MOBILE STATION
204
302
DOWNLINK
UPLINK
304

FIG. 3

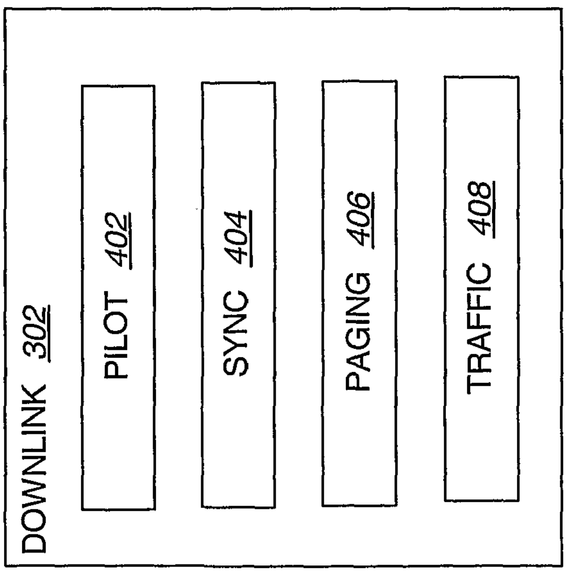
DOWNLINK 302
PILOT 402
SYNC 404
PAGING 406
TRAFFIC 408

FIG. 4

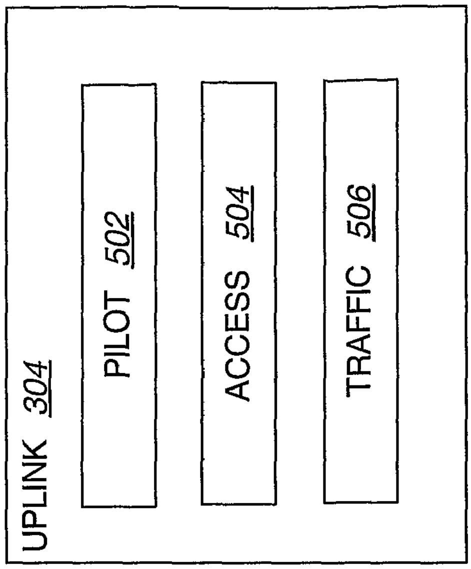
UPLINK 304
PILOT 502
ACCESS 504
TRAFFIC 506

FIG. 5

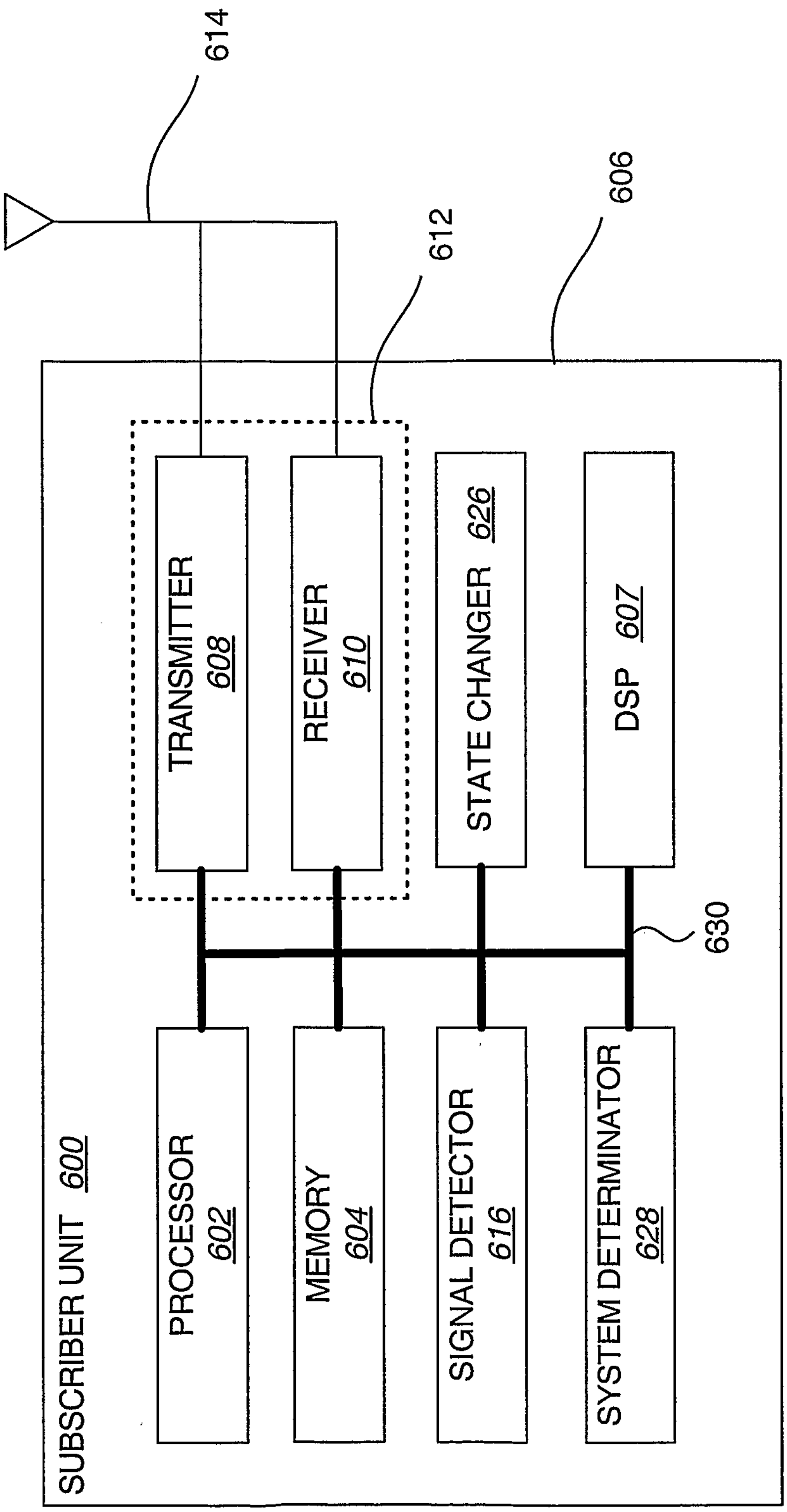
614
612
606
SUBSCRIBER UNIT 600
TRANSMITTER 608
RECEIVER 610
STATE CHANGER 626
DSP 607
PROCESSOR 602
MEMORY 604
SIGNAL DETECTOR 616
SYSTEM DETERMINATOR 628
630

FIG. 6

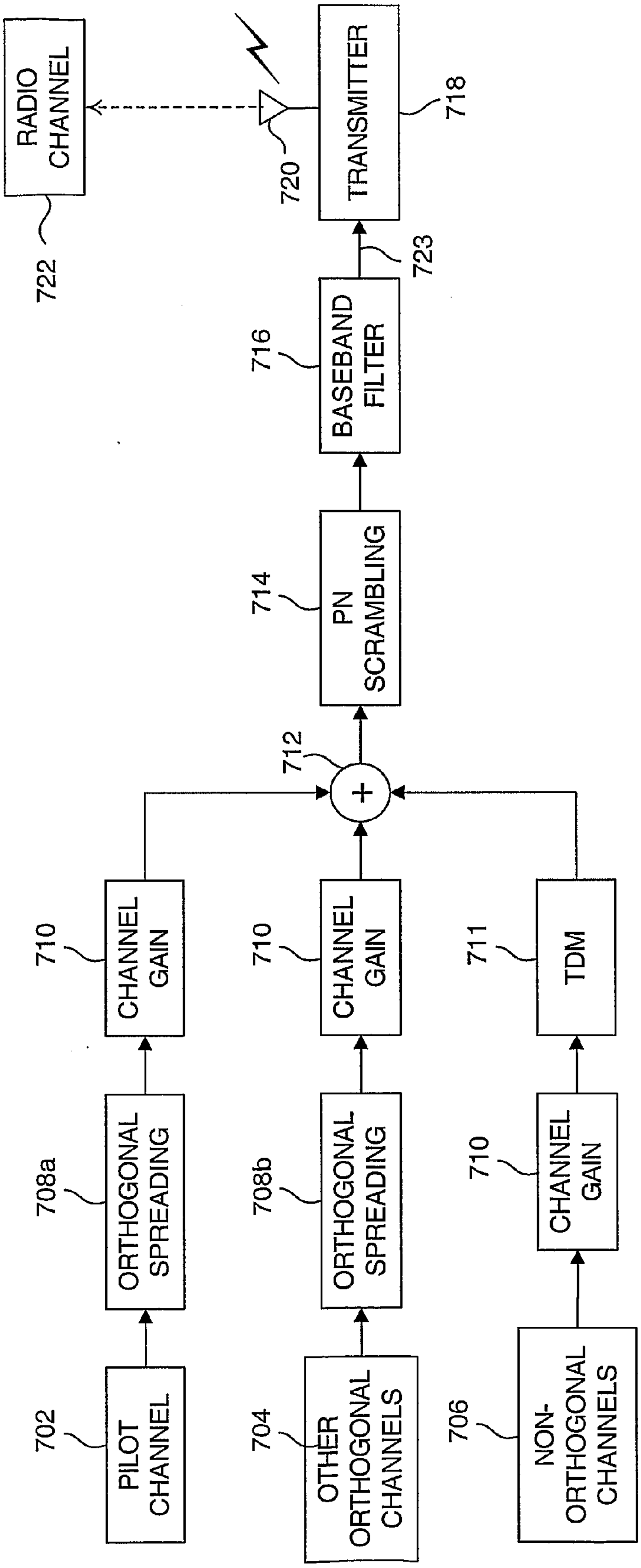
RADIO CHANNEL
722
720
TRANSMITTER
718
723
BASEBAND FILTER
716
PN SCRAMBLING
714
712
+
CHANNEL GAIN
710
CHANNEL GAIN
710
TDM
711
ORTHOGONAL SPREADING
708a
ORTHOGONAL SPREADING
708b
CHANNEL GAIN
710
PILOT CHANNEL
702
OTHER ORTHOGONAL CHANNELS
704
NON-ORTHOGONAL CHANNELS
706

FIG. 7

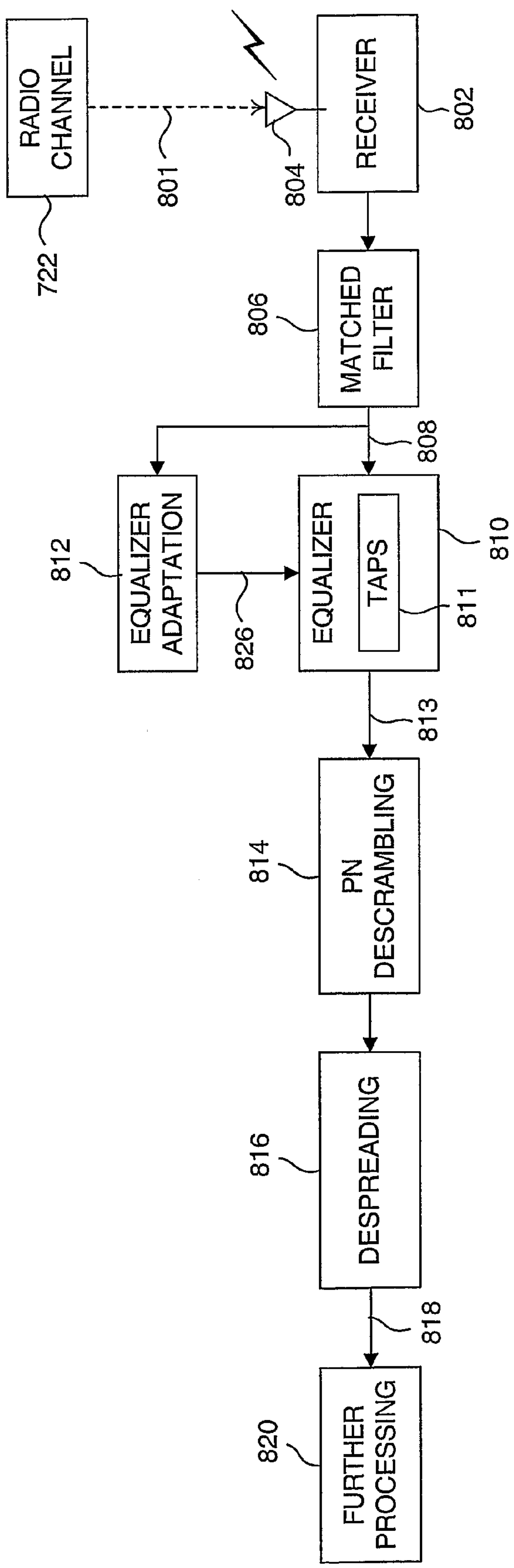
RADIO CHANNEL
722
801
804
RECEIVER
802
MATCHED FILTER
806
808
EQUALIZER ADAPTATION
812
826
EQUALIZER
TAPS
810
811
813
PN DESCRAMBLING
814
DESPREADING
816
818
FURTHER PROCESSING
820

FIG. 8

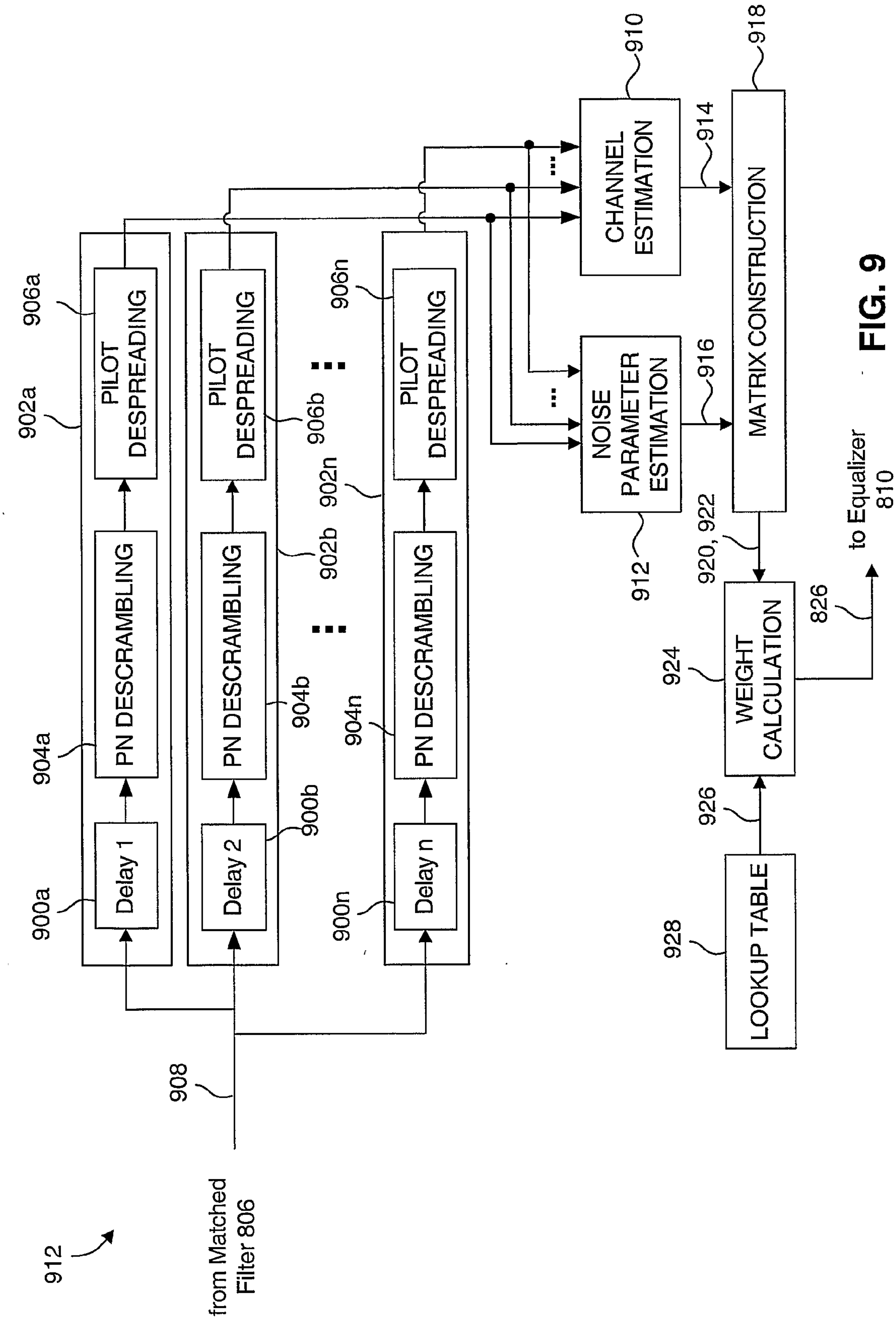
912
from Matched
Filter 806
908
900a
Delay 1
904a
PN DESCRAMBLING
902a
PILOT
DESPREADING
906a
Delay 2
900b
PN DESCRAMBLING
904b
902b
PILOT
DESPREADING
906b
900n
Delay n
904n
PN DESCRAMBLING
902n
PILOT
DESPREADING
906n
CHANNEL
ESTIMATION
910
914
NOISE
PARAMETER
ESTIMATION
912
916
MATRIX CONSTRUCTION
918
920, 922
WEIGHT
CALCULATION
924
926
LOOKUP TABLE
928
826
to Equalizer
810

FIG. 9

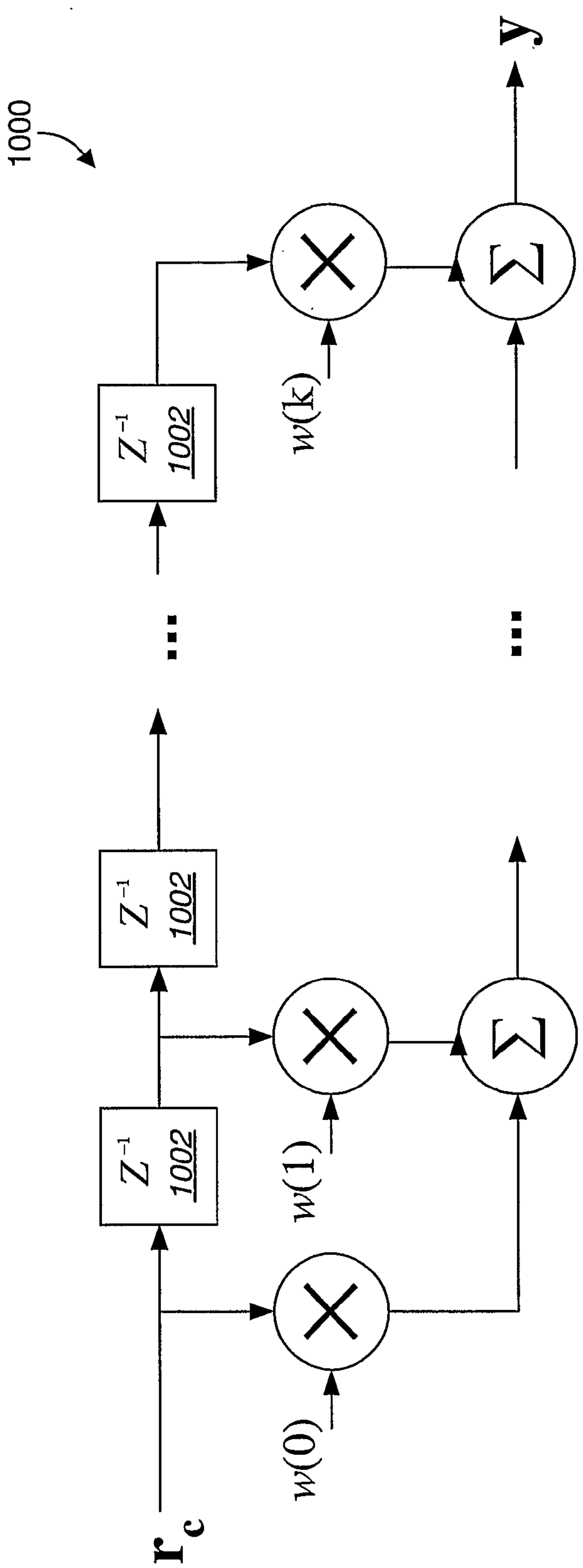


FIG. 10

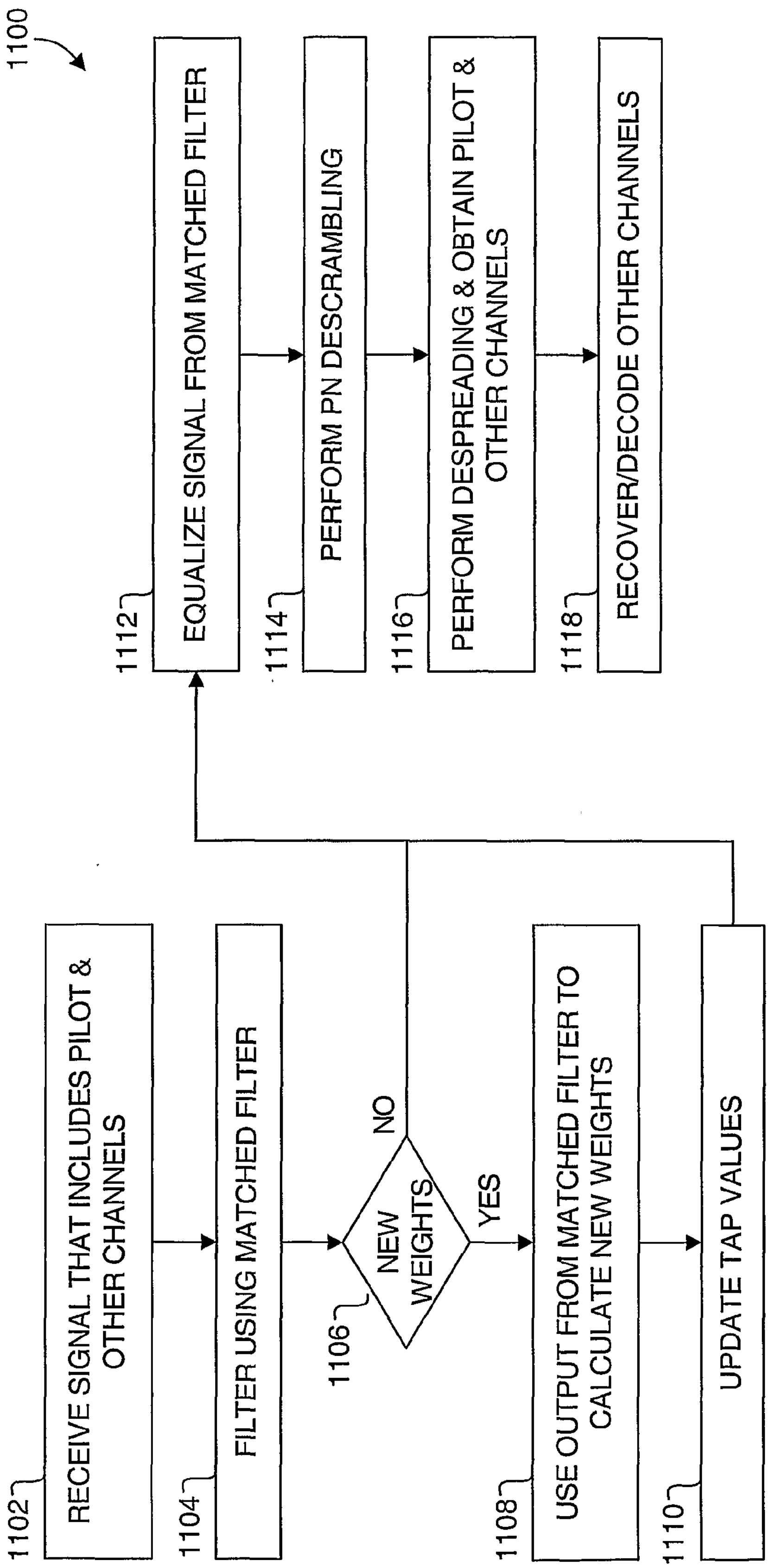
1100
1102
RECEIVE SIGNAL THAT INCLUDES PILOT & OTHER CHANNELS
1104
FILTER USING MATCHED FILTER
1106
NEW WEIGHTS
NO
YES
1108
USE OUTPUT FROM MATCHED FILTER TO CALCULATE NEW WEIGHTS
1110
UPDATE TAP VALUES
1112
EQUALIZE SIGNAL FROM MATCHED FILTER
1114
PERFORM PN DESCRAMBLING
1116
PERFORM DESPREADING & OBTAIN PILOT & OTHER CHANNELS
1118
RECOVER/DECODE OTHER CHANNELS

FIG. 11

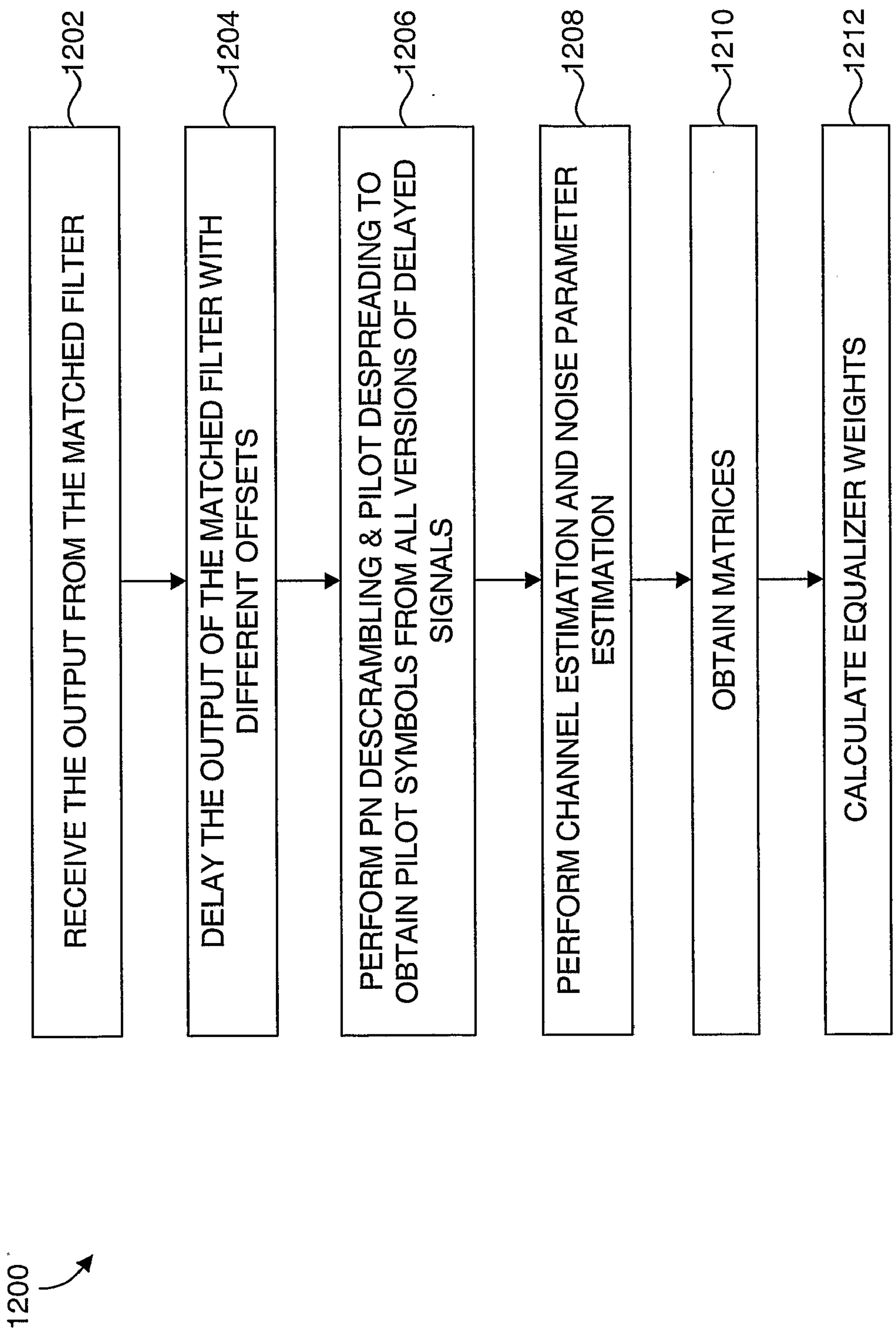
1200
RECEIVE THE OUTPUT FROM THE MATCHED FILTER
1202
DELAY THE OUTPUT OF THE MATCHED FILTER WITH DIFFERENT OFFSETS
1204
PERFORM PN DESCRAMBLING & PILOT DESPREADING TO OBTAIN PILOT SYMBOLS FROM ALL VERSIONS OF DELAYED SIGNALS
1206
PERFORM CHANNEL ESTIMATION AND NOISE PARAMETER ESTIMATION
1208
OBTAIN MATRICES
1210
CALCULATE EQUALIZER WEIGHTS
1212

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5101501 A


### Non-patent literature cited in the description


- cdma2000 High Rate Packet Data Air Interface Specification. *3GPP2 C.S0024,* 27 October 2000